# EUROPÄISCHE PATENTSCHRIFT

(11) **EP 2 877 823 B1**
(45) Veröffentlichungstag und Bekanntmachung des Hinweises auf die Patenterteilung: **28.12.2016**
(21) Anmeldenummer: 13750554.1
(22) Anmeldetag: 14.08.2013
(51) Int. Cl.: G01J 5/04, G01J 5/02, G01J 5/06, G01J 5/08, G01J 5/00

(54) **MESSVORRICHTUNGSGEHÄUSE**
HOUSING FOR MEASURING DEVICE
BOÎTIER POUR DISPOSITIF DE MESURE

(30) Priorität: 13.09.2012 DE 102012216267
(43) Veröffentlichungstag der Anmeldung: 03.06.2015
(73) Patentinhaber: Siemens Aktiengesellschaft, 80333 München (DE)
(72) Erfinder: KIELIGER, Joe, CH-8645 Jona (CH); LENZE, Martin, 45359 Essen (DE)
(86) Internationale Anmeldenummer: PCT/EP2013/067030
(87) Internationale Veröffentlichungsnummer: WO 2014/040817

(56) Entgegenhaltungen:
- DE-A1-102005 060 961
- DE-A1-102011 057 158
- DE-T2- 69 722 305

## Beschreibung

Die Erfindung betrifft ein Messvorrichtungsgehäuse für eine eine physikalische Größe berührungslos erfassende Sensorkomponente bzw. für einen derartigen Sensor, umfassend eine Koppeleinrichtung zum Zuführen von mindestens einem Kühl-/und oder Spülmedium und mindestens einer Signalübertragungsleitung in das Gehäuseinnere oder in eine Gehäusewand, ein an der Koppeleinrichtung angeordnetes Führungsrohr mit einer Längsachse und einen an einem der Koppeleinrichtung gegenüberliegendem Endabschnitt des Führungsrohrs befestigten Sondenkopf, wobei das Führungsrohr ausgestaltet ist, dass mindestens eine Medium und die mindestens eine Signalübertragungsleitung bis zum Sondenkopf zu führen bzw. zu beherbergen.

Eine Messvorrichtung mit einem derartigen Gehäuse ist beispielsweise aus der DE 10 2005 060 961 A1 bekannt. Die auch als Messlanze bezeichnete Messvorrichtung umfasst hauptsächlich ein Rohr, in dem die Sensorleitungen und Kühlluft geführt werden können. Die Sensorleitungen sowie das Kühlmittel werden an einem Ende des Rohres eingeführt bzw. eingespeist. Dieses Ende des Rohres ist bei der Anwendung der Messlanze in einer Gasturbine zur Radialspalterfassung außerhalb des Gehäuses der Gasturbine angeordnet. An dem anderen Ende des Rohres ist der Sensor befestigt. Um den Sensor vor Überhitzung zu schützen, ist dieser von koaxialen Kühlluftbohrungen flankiert, durch welche die im Rohr strömende Kühlluft austreten kann.

Es wird als nachteilig empfunden, dass der Sensor und dessen Gehäuse vergleichsweise großbauend sind und somit einen erhöhten Kühlluftbedarf aufweisen, damit diese zuverlässig einsetzbar sind. Es ist von weiterem Nachteil, dass die bekannte Messvorrichtung auch nur für einen einzigen Sensor ausgestaltet ist.

Aufgabe der Erfindung ist daher die Bereitstellung eines Messvorrichtungsgehäuses für eine eine physikalische Größe berührungslos erfassende Sensorkomponente bzw. für einen derartigen Sensor, der einerseits vergleichsweise platzsparend ist und bei dem der Sondenkopf vergleichsweise einfach auswechselbar ist.

Die der Erfindung zugrunde liegende Aufgabe wird mit einem Messvorrichtungsgehäuse gemäß den Merkmalen des Anspruchs 1 gelöst. Vorteilhafte Ausgestaltungen sind in den abhängigen Ansprüchen angegeben, die in beliebiger Weise miteinander kombiniert werden können.

Erfindungsgemäß ist vorgesehen, dass der Sondenkopf und der Endabschnitt des Führungsrohres des Messvorrichtungsgehäuses in Bezug auf dessen Längsachse jeweils sich radial erstreckende Passagen zur Weiterleitung eines Kühl- und/oder Spülmediums oder mehrerer Kühl- und/oder Spülmedien vom Endabschnitt in den Sondenkopf und ggf. umgekehrt aufweist.

Mit Hilfe der vorgenannten Ausgestaltung ist es möglich, ein Kühl- und/oder Spülmedium oder auch mehrere derartige Medien entlang des Führungsrohres einer Messvorrichtung zu leiten und an dessen Endabschnitt in den Sondenkopf zu übergeben und ggf. daraus wieder zurückzuleiten. Die Übergabe der Medien erfolgt durch Passagen, die sowohl im Sondenkopf als auch im Endabschnitt des Führungsrohres angesiedelt sind und sich jeweils radial erstrecken. Für jedes Kühlmedium bzw. für jede Übergabe müssen dann die zugeordneten Passagen im gleichen axialen Abschnitt angeordnet sein. Da ein radiales Fluchten der Passagen im Sondenkopf mit den Passagen im Endabschnitt vergleichsweise schwierig ist, ist vorgesehen, dass radial zwischen Sondenkopf und dem Führungsrohr ein axial begrenzter Ringkanal verbleibt, über den das über die Passagen des Führungsrohrs zugeführte Kühlmedium anschließend durch die radialen Passagen des Sondenkopfes in das Innere des Sondenkopfes eingeleitet werden kann. Gleiches gilt selbstverständlich auch für die Rückleitung von bereits bestimmungsgemäß eingesetztem Medium. Vorzugsweise sind die Passagen als radiale Bohrungen im Führungsrohr und im Sondenkopf ausgeführt, deren äußere Öffnungen ggf. mit Stopfen verschlossen worden sind.

Ein besonderer Vorteil der Erfindung liegt darin, dass, wenn der Sondenkopf lösbar im Endabschnitt des Führungsrohres befestigt ist, was vorzugsweise durch eine Schraubverbindung möglich ist, unterschiedliche Sondenköpfe mit unterschiedlich angeordneten Ausnehmungen am Führungsrohr lösbar befestigt werden können, ohne dass der Rest des Messvorrichtungsgehäuses ausgetauscht werden oder doppelt vorhanden sein muss. Dies verringert die Herstellungskosten von Messvorrichtungen, da für unterschiedliche Blickrichtungen von optischen Sonden nun nur unterschiedliche Sondenköpfe bereitgestellt werden müssen; der Rest der Messvorrichtung bzw. des Messvorrichtungsgehäuses kann mehrfach verwendet werden.

Wenn mehrere Kühl- und/oder Spülmedien innerhalb eines Führungsrohrs in separaten axialen Kanälen geführt werden, ist es von Vorteil, wenn zwischen den radialen Passagen, die entlang der Längsachse verteilt sind, eine Ringdichtung zur axialen Begrenzung der Ringkanäle vorgesehen ist. Damit kann eine Vermischung der getrennt geführten, unterschiedlichen Kühlmedien bei der Übergabe des Kühlmediums aus dem Führungsrohr in den Sondenkopf und ggf. umgekehrt vermieden werden.

Vorzugsweise weist der Sondenkopf eine freiendende Sondenspitze auf und der Endabschnitt des Führungsrohres und der Sondenkopf überlappen sich axial derart, dass die radialen Passagen axial zwischen der Befestigung - vorzugsweise der Schraubverbindung von Sondenkopf und Endabschnitt - und der Sondenspitze angeordnet sind.

Weiter bevorzugt sind in Umfangsrichtung des Sondenkopfs und/oder des Endabschnitts mehrere radiale Passagen vorgesehen, wodurch eine ausreichend große Querschnittsfläche für das betreffende Kühlmedium bereit gestellt werden kann. Dies verringert Druckverluste bei der Führung des Kühlmediums im Messvorrichtungsgehäuse.

Um einen passgenauen Sitz des Sondenkopfes im Endabschnitt des Führungsrohres zu gewährleisten, sind entweder am Sondenkopf oder im Endabschnitt Führungselemente vorzugsweise vorgesehen.

Um vergleichsweise einfach unterschiedliche Kühlmedien entlang des Führungsrohres, entlang des Endabschnittes und entlang des Sondenkopfes getrennt zu führen, sind in diesen Bauteilen axial erstreckende Kanäle vorgesehen, die auf einem Radius liegend sich koaxial zur Mittelachse des Führungsrohres, des Endabschnitts bzw. des Sondenkopfes erstrecken, wobei die Kanäle mit den ihnen zugeordneten, radialen Passagen in Strömungsverbindung stehen.

Wenn es sich bei der zu erfassenden physikalischen Größe um Lichtwellen handelt, ist vorzugsweise im Sondenkopf ein Mittel zur Durchleitung der zu erfassenden Größe in das Gehäuseinnere vorgesehen. Vorzugsweise ist bei der letztgenannten Ausgestaltung das Mittel eine temperaturbeständige lichtdurchlässige Blende, die in einer Ausnehmung des Sondenkopfes sitzt, wobei zwischen der Blende und der die Ausnehmung begrenzenden Wand zumindest ein Kühlkanal vorgesehen ist. Hierdurch lässt sich die temperaturbeständige lichtdurchlässige Blende besonders einfach kühlen, was zu deren Temperaturbeständigkeit beitragen kann. Ebenso bevorzugt ist die Ausgestaltung, bei der das Führungsrohr und der Endabschnitt von außen isoliert sind.

Der Endabschnitt kann ein monolithischer Teil des Führungsrohrs oder auch an diesem befestigt sein.

Vorzugsweise werden drei unterschiedliche Medien dem Sondenkopf zugeführt, von denen zwei vom Sondenkopf zurück in das Führungsrohr geleitet werden können. Dies erfordert, dass es mindestens vier, entlang der Axialrichtung, verteilte Abschnitte gibt, in denen über den Umfang verteilte, sich in Radialrichtung erstreckende Passagen im Führungsrohr und im Sondenkopf angesiedelt sind, die durch dazwischen angeordnete Ringdichtungen gegeneinander abgedichtet sind.

Weitere Vorteile und Merkmale der Erfindung werden anhand eines Ausführungsbeispiels näherer erläutert. Es zeigen:
- Figur 1: den Längsschnitt durch ein Messvorrichtungsgehäuse,
- Figur 2, 3: jeweils einen Längsschnitt durch das einen Sondenkopf aufnehmende Ende eines Führungsrohres des Messvorrichtungsgehäuses,
- Figur 4: den Querschnitt durch einen Endabschnitt des Führungsrohrs,
- Figur 5: einen Längsschnitt durch einen Sondenkopf,
- Figuren 6, 7, 8: weitere Längsschnitte durch den Sondenkopf und
- Figuren 9, 10, 11: unterschiedliche Sondenköpfe für unterschiedliche Erfassungsrichtungen.

In allen Figuren sind identische Merkmale mit identischen Bezugszeichen versehen.

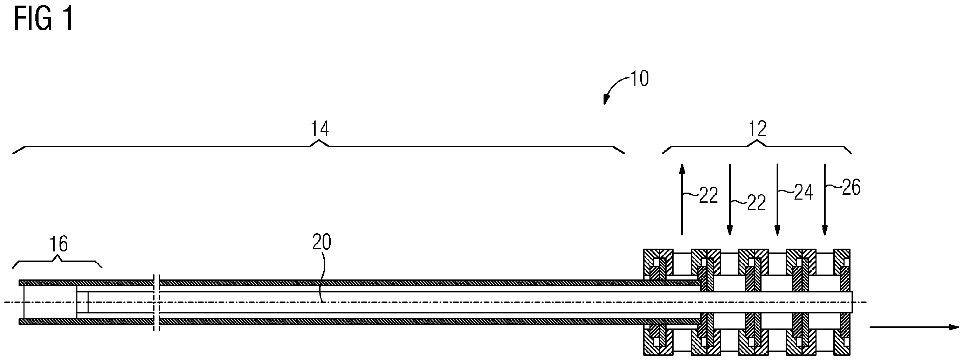

Figur 1 zeigt schematisch in einem Längsschnitt ein Messvorrichtungsgehäuse 10. Das Messvorrichtungsgehäuse 10, nachfolgend nur kurz Gehäuse 10 genannt, umfasst im Wesentlichen drei Komponenten: eine Koppeleinrichtung 12, ein Führungsrohr 14 mit einem Endabschnitt 16 sowie einen im Endabschnitt 16 eingeschraubten Sondenkopf. Der Sondenkopf ist in Figur 1 nicht dargestellt. Das Führungsrohr 14 erstreckt sich entlang einer Längsachse 20. Ohne weitere Details in Figur 1 zu zeigen, ist die Koppeleinrichtung 12 ausgestaltet, insgesamt drei Medien 22, 24 und 26 in das Messvorrichtungsgehäuse 10 einzuspeisen und an das Führungsrohr 14 getrennt zu übergeben. Von den drei Medien können zwei als Kühlmedien wieder ausgeleitet werden. Die Medien 22, 24, 26 werden innerhalb des Gehäuses 10 bis zum Endabschnitt 16 des Führungsrohres 14 getrennt voneinander geführt und dort dem Sondenkopf übergeben. Die dazu erforderliche Konstruktion wird in den nachfolgenden Figuren näher erläutert.

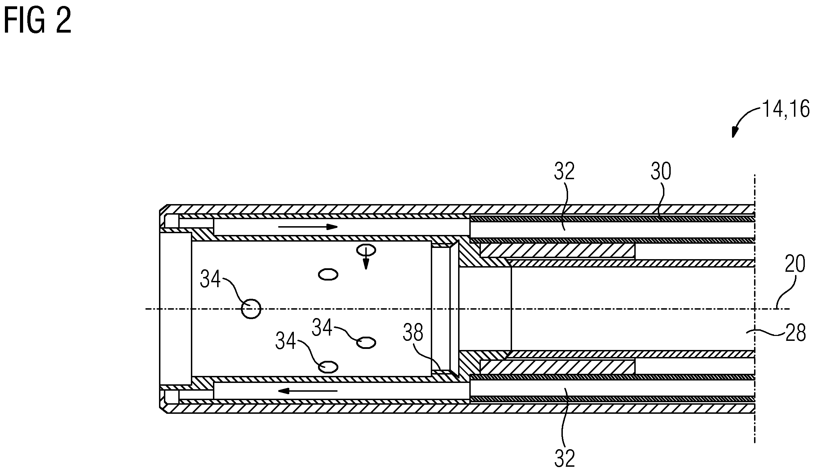

Figur 2 zeigt als vergrößertes Detail den Endabschnitt 16 des Führungsrohres 14. Das Führungsrohr 14 ist im Inneren hohl ausgebildet, wobei der Hohlraum 28 einerseits zur Rückführung eines der Medien dient und andererseits zur Beherbergung von Signalübertragungsleitungen oder Sensorleitungen. In den Hohlraum 28 kann beispielsweise eine optische Faser oder ein Lichtwellenleiter eingesetzt sein. Auch ist es möglich, dort elektrische Leitungen eines Sensors anzuordnen, welcher Sensor im Sondenkopf dann untergebracht ist. Alsbald das Messvorrichtungsgehäuse 10 einen Sensor oder eine Signalübertragungsleitung für bzw. von dem Sensor beherbergt, ist darunter auch eine Messvorrichtung zu verstehen.

Zudem kann das Führungsrohr 14 außen isoliert bzw. wärmegedämmt sein, was aber nicht dargestellt ist.

Das besondere am Führungsrohr 14 ist, dass dieses vergleichsweise dickwandig ausgestaltet ist, so dass in dessen Wand 30 entlang des Umfangs verteilt und somit koaxial zur Längsachse 20 eine Anzahl von Kanälen 32 angeordnet sind. Im Längsschnitt (nach Figur 2) sind zwei dieser Kanäle 32 dargestellt, die in Bezug auf die Ziffern einer Uhr beispielsweise an einer Zwölf-Uhr-Position und einer Sechs-Uhr-Position angeordnet sein können. Auch an anderen Umfangspositionen (beispielweise Ein-Uhr, Zwei-Uhr, Drei-Uhr, Vier-Uhr, Fünf-Uhr, Sieben-Uhr, Acht-Uhr, Neun-Uhr, Zehn-Uhr, Elf-Uhr) sind jeweils sich axial erstreckende Kanäle 32 vorgesehen, so dass durch die einzelnen Kanäle 32 die unterschiedlichen Medien 22, 24, 26 getrennt voneinander geführt werden können. Die im Führungsrohr 14 angeordneten Kanäle 32 erstrecken sich von der Koppeleinrichtung 12 bis in den am Führungsrohr 14 angeordneten Endabschnitt 16. Die im Endabschnitt 16 sich axial erstreckenden Abschnitte der Kanäle 32 können beispielsweise durch Bohren hergestellt sein, wobei die Bohrungsöffnungen endseitig durch Stopfen 36 wieder verschlossen sein können. An unterschiedlichen Umfangspositionen der entsprechenden Kanäle 32 ist für jeden Kanal 32 eine weitere von außen bis in das Innere des Endabschnitts 16 reichende Bohrung vorgesehen. Teile dieser Bohrungen - nämlich der äußere Teil - werden dann wieder von außen durch Stopfen 36 verschlossen, so dass die Restbohrungen dann die radialen Passagen 34 formen, durch die das in den Kanälen 32 strömenden Medium radial nach innen umgelenkt wird.

Der Endabschnitt 16 kann beispielsweise durch Löten stoffschlüssig am Führungsrohr 14 befestigt sein. Der Endabschnitt kann aber auch Teil des Führungsrohres 14 sein.

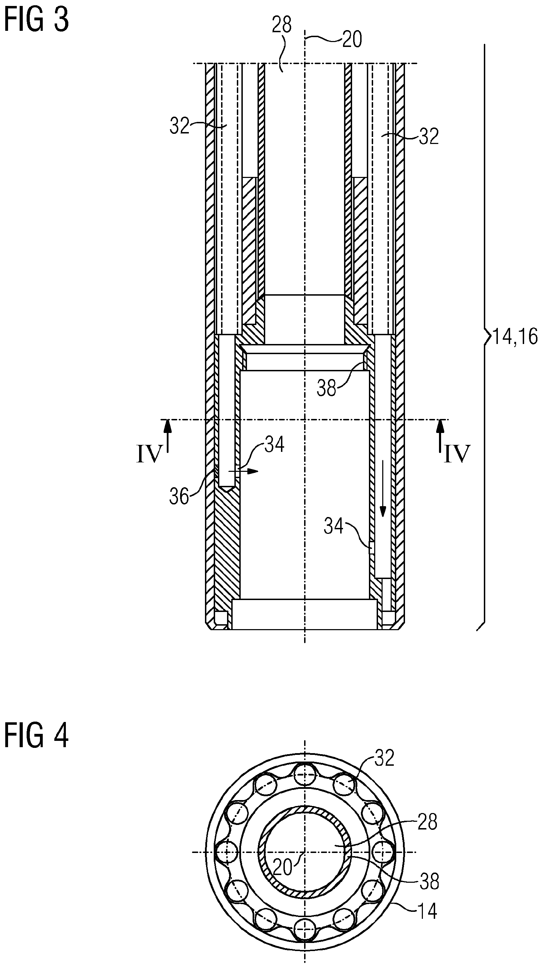

Im Endabschnitt 16 ist ein Innengewinde 38 vorgesehen, in welches ein Sondenkopf (in Figur 2 auch nicht dargestellt) eingeschraubt werden kann. Figur 3 zeigt den gleichen Längsschnitt wie Figur 2, jedoch ist der Endabschnitt 16 monolithisch bzw. Teil des Führungsrohres 14.

Zudem ist in Figur 3 dargestellt, dass die radiale Passage 34, welche durch Bohren hergestellt wurde, durch einen Stopfen 36 von außen wieder teilweise verschlossen ist. Damit ist es möglich, den Kanal 32 strömungstechnisch mit der radialen Passage 34 zu verbinden.

Figur 4 zeigt den Querschnitt durch den Endabschnitt 16 des Führungsrohres 14. Dabei ist alle 30° einer der insgesamt zwölf sich in Axialrichtung erstreckenden Kanäle 32 dargestellt. Das Gewinde 38 zur Befestigung des Sondenkopfes 18 ist im Inneren des Führungsrohres 14 vorgesehen.

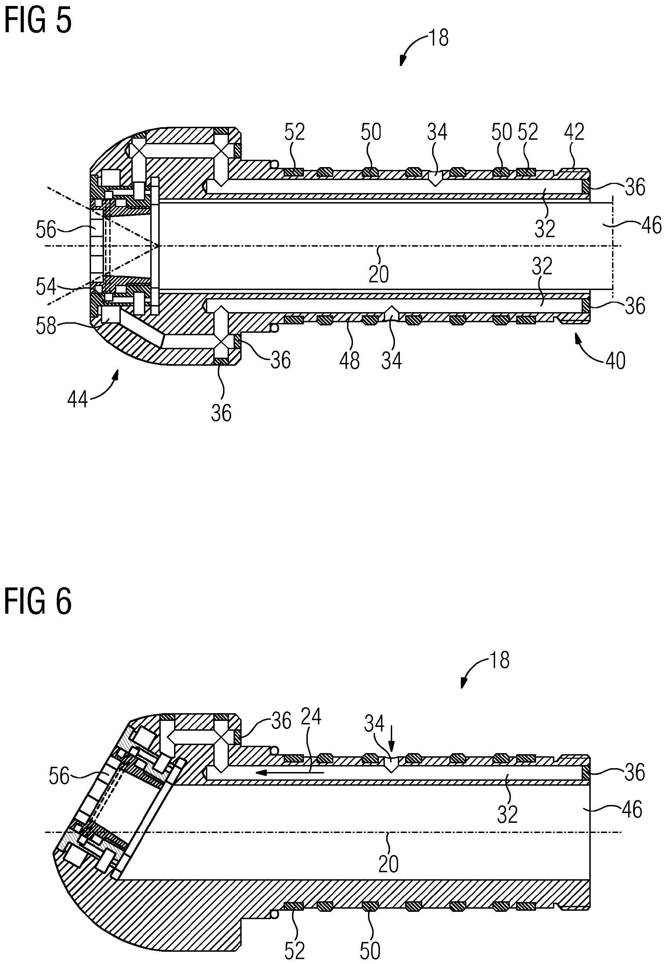

Figur 5 zeigt ein erstes Ausführungsbeispiel eines Sondenkopfes 18. Der Sondenkopf 18 weist ein erstes Ende 40 auf, an dem ein Gewinde 42 zum Einschrauben des Sondenkopfes 18 in das Führungsrohr 14 vorgesehen ist. Das andere axiale Ende des Sondenkopfes 18 wird als Sondenspitze 44 bezeichnet. Der Sondenkopf 18 ist insgesamt hülsenartig ausgebildet mit einem Hohlraum 46 im Inneren. Die rohrförmige Wand 48 des Sondenkopfes 18 ist in analoger Weise wie das Führungsrohr 14 mit sich in Axialrichtung erstreckenden Kanälen 32 ausgestattet, die ebenfalls durch Bohren hergestellt werden können. Nach dem Bohren werden einige der Bohröffnungen mit Hilfe von Stopfen 36 verschlossen. In Analogie zu dem in Figur 4 dargestelltem Führungsrohr 14 weist auch der Sondenkopf 18 in entsprechender Anzahl entlang des Umfangs verteilte koaxial zur Längsachse 20 angeordnete Kühlkanäle 32 auf. Um die von dem Führungsrohr 14 bereitgestellten Kühlmedien 22, 24, 26 in den Sondenkopf 18 getrennt zu überführen, sind in dessen Wand 48 an entsprechenden axialen Positionen durch Sackloch-Bohrungen hergestellte radiale Passagen 34 angeordnet. Mit Hilfe dieser Passagen 34 lassen sich die unterschiedlichen Kühlmedien 22, 24, 26 in unterschiedliche Kanäle 32 in den Sondenkopf 18 überführen. Um eine Vermischung der unterschiedlichen Kühlmedien 22, 24, 26 bei der Übergabe zu vermeiden, sind zwischen axial benachbarten radialen Passagen 34 Ringdichtungen 50 vorgesehen. Im gezeigten Ausführungsbeispiel sind fünf Ringdichtungen 50 vorgesehen. Die beiden äußersten Ringdichtungen 50 sind dabei von Führungselementen 52 flankiert, um einen passgenauen Sitz des Sondenkopfes 18 im Endabschnitt 14 zu gewährleisten. An der Sondenspitze 44 weist der Sondenkopf 18 eine Ausnehmung 54 auf, in die eine Blende 56 eingesetzt ist. Zwischen der Wand der Ausnehmung 54 und der Blende 56 kann zudem ein Kühlkanal 58 vorgesehen sein, um die meist kreisförmige Blende 56 mit Kühlmedium zu kühlen.

Bei dem in Figur 5 dargestellten Ausführungsbeispiel des Sondenkopfes 18 fällt die Blickrichtung des Sondenkopfes mit der Längsachse 20 zusammen. Aus diesem Grund ist die Blende 56 senkrecht zur Längsachse 20 ausgerichtet. In den Figuren 6 bis 8 sind in unterschiedlichen Ebenen liegende Längsschnitte eines weiteren Ausführungsbeispiels des Sondenkopfes 18 gezeigt. Bei dem weiteren Ausführungsbeispiel ist die Blickrichtung des Sondenkopfes um ca. 30° gegenüber der Längsachse 20 geneigt. Die in den Figuren 6 bis 8 dargestellte Schnittebenen liegen jeweils um einen Winkel von 30° versetzt zueinander und entsprechen somit den Längsschnitten dreier Ebenen, die durch unterschiedliche Durchmesser mit der Längsachse aufgespannt werden. Die drei Durchmesser können dabei beispielsweise auf unterschiedlichen Sehnen liegen: zwischen Ein-Uhr und Sieben-Uhr, zwischen Zwei-Uhr und Acht-Uhr und zwischen Drei-Uhr und Neun-Uhr.

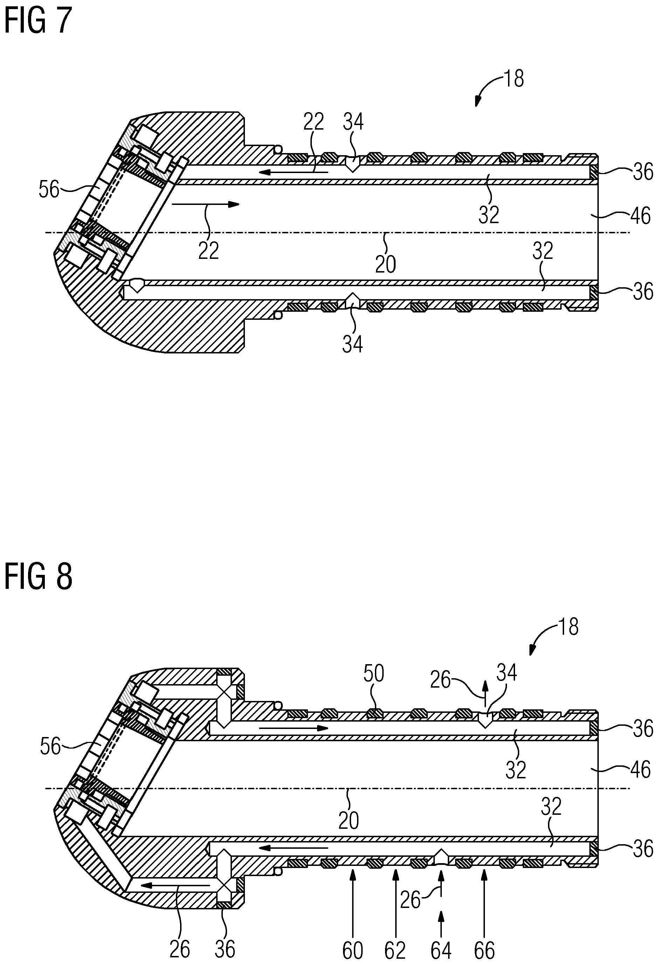

Ebenso wie beim ersten Ausführungsbeispiel des Sondenkopfes 18 nach Figur 5 sind beim zweiten Ausführungsbeispiel des Sondenkopfes 18 nach den Figuren 6 bis 8 vier axial aufeinander folgende Abschnitte 60, 62, 64, 66 vorgesehen, die durch Ringdichtungen 50 voneinander getrennt sind. Im Abschnitt 60 ist Kühlluft 22 über die Passagen 34 (Figur 7) den Kanälen 32 zuführbar. Diese wird anschließend zur Ausnehmung 54 geführt, wonach diese durch den Hohlraum 46 aus dem Sondenkopf 18 zentral ausgeleitet werden kann. Somit dienen beide in Figur 7 dargestellten Kanäle 32 und Passagen 34 als Zuführungsleitung von Kühlluft 22, wohingegen der Hohlraum 46 zur Abführung der dann erhitzten Kühlluft 22 dient.

Im zweiten axialen Abschnitt 62 ist über die in Figur 6 dargestellte radiale Passage 34 ein zweites Medium 24 in Form von sog. "Spülluft" zuführbar. Diese Spülluft wird über weitere Abschnitte der Blende 56 zugeführt und verhindert ein Verschmutzen der heißgasseitigen Fläche der Blende 56. Im Abschnitt 64 kann dem in Figur 8 dargestellten Kanal 32 (auf neun Uhr angeordnet) ein drittes Kühlmedium 26, beispielsweise Kühlwasser in den Sondenkopf 18 eingebracht werden. Anschließend strömt dieses Kühlwasser 26 zur Blende 56, umspült diese und strömt anschließend über den in Figur 8 oben dargestellten Kühlkanal 32 und der radialen Passage 34, welche im vierten Abschnitt 66 angeordnet ist, aus dem Sondenkopf 18 heraus. Danach tritt das herausgeführte Kühlmedium 26 wieder in das Führungsrohr 14 ein und wird zu dessen koppelseitigem Ende geführt.

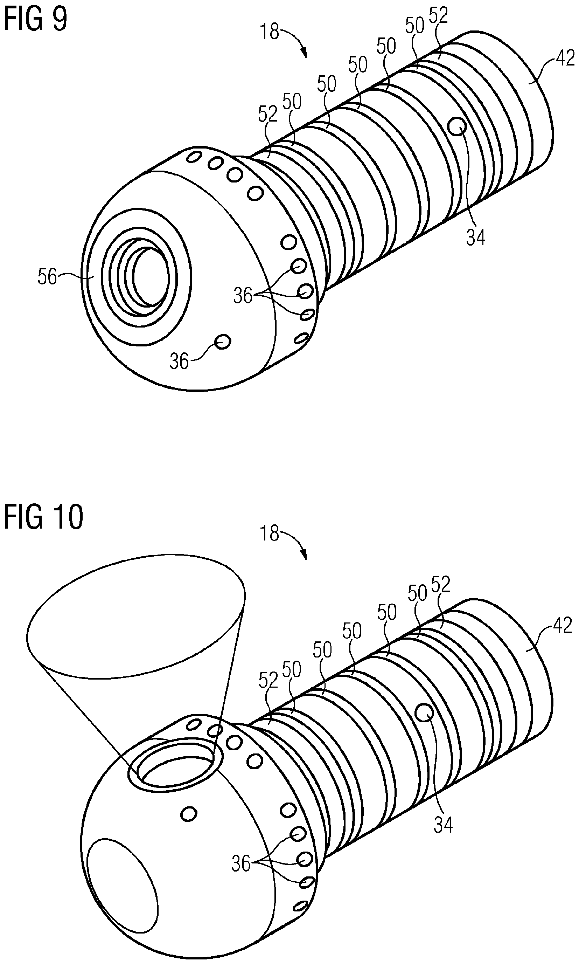

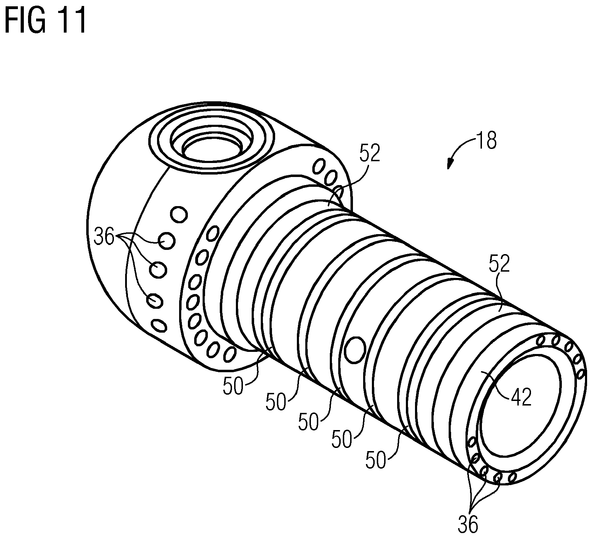

Die Figuren 9 bis 11 zeigen in perspektivischer Darstellung Sondenköpfe 18 für unterschiedliche Blickrichtungen: in Figur 9 ist ein Sondenkopf mit einem Blickwinkel 30° dargestellt, in Figur 10 ein Sondenkopf mit einem Blickwinkel von 80° und in Figur 11 ist der Sondenkopf mit einem Blickwinkel von 90° dargestellt. Zudem sind in den Figuren 9 bis 11 folgende Merkmale dargestellt: die axialen Abschnitte 60, 62, 64, 66, die Dichtringe 50, das Gewinde 42 zum Einschrauben des jeweiligen Sondenkopfes 18 in das Führungsrohr 14 und die in den unterschiedlichen axialen Abschnitten 60 bis 66 angeordneten radialen Passagen 34.

Insgesamt wird mit der vorliegenden Erfindung ein Messvorrichtungsgehäuse 10 für eine eine physikalische Größe berührungslos erfassenden Sensorkomponente bzw. für einen derartigen Sensor angegeben, welcher umfasst: eine Koppeleinrichtung 12 zum Zuführen von mindestens einem Kühl- und/oder Spülmedium 22, 24, 26 und mindestens einer Signalübertragungsleitung in das Gehäuseinnere oder in eine Gehäusewand, ein an der Koppeleinrichtung 12 angeordnetes Führungsrohr 14 mit einer Längsachse 20 und einen in einem der Koppeleinrichtung 12 gegenüberliegenden Endabschnitt 16 des Führungsrohrs 14 lösbar befestigten Sondenkopf 18, wobei das Führungsrohr 14 so ausgestaltet ist, das mindestens eine Kühl- und/oder Spülmedium 22, 24, 26 und die mindestens eine Signalübertragungsleitung bis zum Sondenkopf 18 zu führen bzw. zu beherbergen. Um eine vergleichsweise kleinbauende und platzsparende Messvorrichtung und somit auch ein Messvorrichtungsgehäuse 10 bereitzustellen, bei dem unterschiedliche Sondenköpfe vergleichsweise einfach im Führungsrohr 14 geleitete unterschiedliche Kühlmedien 22, 24, 26 zuverlässig übergeben werden können, wird vorgeschlagen, dass der Sondenkopf 18 und der Endabschnitt 16 in Bezug auf die Längsachse 20 des Führungsrohres 14 bzw. des Sondenkopfes 18 jeweils sich radial erstreckende Passagen 34 zur Weiterleitung des Kühlmediums bzw. der Kühlmedien 22, 24, 26 vom Endabschnitt 16 in den Sondenkopf 18 und ggf. umgekehrt aufweisen, und dass radial zwischen Sondenkopf 18 und dem Führungsrohr 14 mindestens ein axial begrenzter Ringkanal ausgebildet ist, über den das über die Passagen 34 des Führungsrohrs 14 zugeführte mindestens eine Kühl- und/oder Spülmedium anschließend durch die radialen Passagen 34 des Sondenkopfes 18 in das Innere des Sondenkopfes 18 eingeleitet werden kann.

## Patentansprüche

1. Messvorrichtungsgehäuse (10) für eine eine physikalische Größe berührungslos erfassende Sensorkomponente bzw. für einen derartigen Sensor,
umfassend:
- eine Koppeleinrichtung (12) zum Zuführen von mindestens einem Kühl- und/oder Spülmedium (22, 24, 26) und mindestens einer Signalübertragungsleitung in das Gehäuseinnere oder in eine Gehäusewand,
- ein an der Koppeleinrichtung (12) angeordnetes Führungsrohr (14) mit einer Längsachse (20) und
- einen in einem der Koppeleinrichtung (12) gegenüberliegenden Endabschnitt (16) des Führungsrohrs (14) lösbar befestigten, vorzugweise eingeschraubten Sondenkopf (18), wobei das Führungsrohr (14) ausgestaltet ist, das mindestens eine Kühl- und/oder Spülmedium (22, 24, 26) und die mindestens eine Signalübertragungsleitung bis zum Sondenkopf zu führen bzw. zu beherbergen,
**dadurch gekennzeichnet, dass**
der Sondenkopf (18) und der Endabschnitt (16) in Bezug auf die Längsachse (20) jeweils sich radial erstreckenden Passagen (34) zur Weiterleitung des mindestens einen Kühl- und/oder Spülmediums (22, 24, 26) vom Endabschnitt (16) in den Sondenkopf (18) und ggf. umgekehrt aufweisen, und dass radial zwischen Sondenkopf (18) und dem Führungsrohr (14) mindestens ein axial begrenzter Ringkanal ausgebildet ist, über den das über die Passagen (34) des Führungsrohrs (14) zugeführte mindestens eine Kühl- und/oder Spülmedium anschließend durch die radialen Passagen (34) des Sondenkopfes (18) in das Innere des Sondenkopfes (18) eingeleitet werden kann.

2. Messvorrichtungsgehäuse (10) nach Anspruch 1,
bei dem der Sondenkopf (18) eine frei endende Sondenspitze (44) aufweist und der Endabschnitt (16) des Führungsrohrs (14) und der Sondenkopf (18) sich derart axial überlappen, dass die Passagen (34) axial zwischen der Befestigung, vorzugsweise der Schraubverbindung, von Sondenkopf (18) und Endabschnitt (16) und der Sondenspitze (44) angeordnet sind.

3. Messvorrichtungsgehäuse (10) nach Anspruch 1 oder 2,
bei dem entlang der Längsachse (20) mehrere radiale Passagen (34) verteilt sind, zwischen denen eine Ringdichtung (50) vorgesehen ist.

4. Messvorrichtungsgehäuse (10) nach Anspruch 1, 2 oder 3,
bei dem in Umfangsrichtung des Sondenkopfs (18) bzw. des Endabschnitts (16) mehrere Passagen (34) vorgesehen sind.

5. Messvorrichtungsgehäuse (10) nach einem der Ansprüche 1 bis 4,
bei dem am Sondenkopf (18) im Überlappungsabschnitt Führungselemente (52) für einen passgenauen Sitz vorgesehen sind.

6. Messvorrichtungsgehäuse (10) nach einem der Ansprüche 1 bis 5,
bei dem im Führungsrohr (14), im Endabschnitt (16) und im Sondenkopf (18) sich axial erstreckende Kanäle (32) vorgesehen sind, die auf einem Radius liegend koaxial zur Mittelachse (20) des Führungsrohres (14), des Endabschnitts (16) bzw. des Sondenkopfs (18) angeordnet sind, wobei die Kanäle (32) mit den Passagen (34) in Strömungsverbindung stehen.

7. Messvorrichtungsgehäuse (10) nach einem der Ansprüche 1 bis 6,
bei dem der Sondenkopf (18) Mittel zur Durchleitung der zu erfassenden Größe in das Gehäuseinnere aufweist.

8. Messvorrichtungsgehäuse (10) nach Anspruch 7,
bei dem das Mittel eine temperaturbeständige lichtdurchlässige Blende (56) ist, die in einer Ausnehmung (54) des Sondenkopfes (18) sitzt und dass zwischen der Blende (56) und der die Ausnehmung (54) begrenzenden Wand zumindest ein Kühlkanal (58) vorgesehen ist.

9. Messvorrichtungsgehäuse (10) nach einem der Ansprüche 1 bis 8,
bei dem das Führungsrohr (14) und der Endabschnitt (16) von außen isoliert sind.

10. Messvorrichtungsgehäuse (10) nach einem der Ansprüche 1 bis 9,
bei dem der Endabschnitt (16) monolithischer Teils des Führungsrohrs (14) oder am diesem befestigt ist.

11. Messvorrichtung mit einem Messvorrichtungsgehäuse nach einem der vorangehenden Ansprüche,
bei dem im Führungsrohr eine Signalübertragungsleitung angeordnet ist.

## Claims

1. Measuring device housing (10) for a sensor component which detects a physical quantity contactlessly, or for such a sensor,
comprising:
- a coupling apparatus (12) for feeding at least one coolant and/or flushing medium (22, 24, 26) and at least one signal transmission line into the housing interior or into a housing wall,
- a guide tube (14) arranged on the coupling apparatus (12) and having a longitudinal axis (20), and
- a probe head (18) releasably fastened, preferably screwed, in an end section (16) of the guide tube (14) lying opposite the coupling apparatus (12),
wherein the guide tube (14) is configured in order to guide or accommodate the at least one coolant and/or flushing medium (22, 24, 26) and the at least one signal transmission line as far as the probe head,
**characterized in that**
the probe head (18) and the end section (16) respectively comprise passages (34), extending radially relative to the longitudinal axis (20), for forwarding the at least one coolant and/or flushing medium (22, 24, 26) from the end section (16) into the probe head (18) and optionally vice versa, and **in that** an axially limited annular channel is formed radially between probe head (18) and the guide tube (14), through which the at least one coolant and/or flushing medium fed through the passages (34) of the guide tube (14) can subsequently be introduced through the radial passages (34) of the probe head (18) into the interior of the probe head (18).

2. Measuring device housing (10) according to Claim 1, wherein the probe head (18) comprises a freely ending probe tip (44), and the end section (16) of the guide tube (14) and the probe head (18) overlap axially in such a way that the passages (34) are arranged axially between the fastening, preferably the screw connection, of probe head (18) and end section (16) and the probe tip (44).

3. Measuring device housing (10) according to Claim 1 or 2, wherein a plurality of radial passages (34), between which a ring seal (50) is provided, are distributed along the longitudinal axis (20).

4. Measuring device housing (10) according to Claim 1, 2 or 3,
wherein a plurality of passages (34) are provided in the circumferential direction of the probe head (18), or the end section (16).

5. Measuring device housing (10) according to one of Claims 1 to 4,
wherein guide elements (52) for an accurate fit are provided on the probe head (18) in the overlap section.

6. Measuring device housing (10) according to one of Claims 1 to 5,
wherein axially extending channels (32) which are arranged on a radius lying coaxially with the midaxis (20) of the guide tube (14), of the end section (16) and of the probe head (18), respectively, are provided in the guide tube (14), in the end section (16) and in the probe head (18), the channels (32) being in flow connection with the passages (34).

7. Measuring device housing (10) according to one of Claims 1 to 6,
wherein the probe head (18) comprises means for delivering the quantity to be detected into the housing interior.

8. Measuring device housing (10) according to Claim 7, wherein the means is a thermally stable light-transmissive aperture (56), which is seated in a
recess (54) of the probe head (18), and at least one cooling channel (58) is provided between the aperture (56) and the wall bounding the recess (54).

9. Measuring device housing (10) according to one of Claims 1 to 8,
wherein the guide tube (14) and the end section (16) are externally insulated.

10. Measuring device housing (10) according to one of Claims 1 to 9,
wherein the end section (16) is a monolithic part of the guide tube (14) or is fastened thereon.

11. Measuring device having a measuring device housing according to one of the preceding claims,
wherein a signal transmission line is arranged in the guide tube.

## Revendications

1. Boîtier (10) de dispositif de mesure pour un élément de capteur détectant une grandeur physique sans contact ou pour un capteur de ce genre,
comprenant :
- un dispositif (12) de couplage pour l'envoi d'au moins un fluide (22, 24, 26) de refroidissement et/ou de purge et d'au moins une ligne de transmission de signal à l'intérieur du boîtier ou dans une paroi du boîtier,
- un tube (14) de guidage qui est disposé sur le dispositif (12) de couplage et qui a un axe (20) longitudinal et
- une tête (18) de sonde fixée de manière amovible en étant de préférence vissée, dans un tronçon (16) d'extrémité du tube (14) de guidage opposé au dispositif (12) de couplage, le tube (14) de guidage étant conformé de manière à guider ou à loger le au moins un fluide (22, 24, 26) de refroidissement et/ou de purge et la au moins une ligne de transmission de signal jusqu'à la tête de sonde,
**caractérisé en ce que**,
la tête (18) de sonde et le tronçon (16) d'extrémité ont, rapporté à l'axe (20) longitudinal, respectivement des passages (34) s'étendant radialement d'acheminement du au moins un fluide (22, 24, 26) de refroidissement et/ou de purge du tronçon (16) d'extrémité à la tête (18) de sonde et, le cas échéant, inversement, et **en ce qu'**il est constitué radialement, entre la tête (18) de sonde et le tube (14) de guidage, au moins un canal annulaire délimité axialement, par lequel le au moins un fluide de refroidissement et/ou de purge, amené par les passages (34) du tube (14) de guidage, peut ensuite, par les passages (34) radiaux de la tête (18) de sonde, être introduit à l'intérieur de la tête (18) de sonde.

2. Boîtier (10) de dispositif de mesure suivant la revendication 1,
dans lequel la tête (18) de sonde a une pointe (44) de sonde se terminant librement et le tronçon (16) d'extrémité du tube (14) de guidage et la tête (18) de sonde se chevauchent axialement de manière à ce que les passages (34) soient disposés axialement entre la fixation, de préférence de vissage, de la tête (18) de sonde et du tronçon (16) d'extrémité et la pointe (44) de la sonde.

3. Boîtier (10) de dispositif de mesure suivant la revendication 2,
dans lequel plusieurs passages (34) radiaux, entre lesquels est prévue une garniture (50) d'étanchéité annulaire, sont répartis le long de l'axe (20) longitudinal.

4. Boîtier (10) de dispositif de mesure suivant les revendications 1, 2 ou 3,
dans lequel plusieurs passages(34) sont prévus dans la direction périphérique de la tête (18) de sonde ou du tronçon (16) d'extrémité.

5. Boîtier (10) de dispositif de mesure suivant l'une des revendications 1 à 4,
dans lequel les éléments (52) de guidage sont, pour une assise adaptée de manière précise, prévus à la tête (18) de sonde dans le tronçon à chevauchement.

6. Boîtier (10) de dispositif de mesure suivant l'une des revendications 1 à 5,
dans lequel des conduits (32) s'étendant axialement sont prévus dans le tube (14) de guidage, dans le tronçon (16) d'extrémité et dans la tête (18) de sonde, passages qui sont disposés en se trouvant sur un rayon coaxialement à l'axe (20) médian du tube (14) de guidage, du tronçon (16) d'extrémité et de la tête (18) de sonde, les conduits (32) étant en communication fluidique avec les passages (34).

7. Boîtier (10) de dispositif de mesure suivant l'une des revendications 1 à 6,
dans lequel la tête (18) de sonde a un moyen pour faire passer la grandeur à détecter à l'intérieur du boîtier.

8. Boîtier (10) de dispositif de mesure suivant la revendication 7,
**caractérisé en ce que** le moyen est un diaphragme (56) résistant à la température et perméable à la lumière, qui est mis dans un évidement (54) de la tête (18) de sonde et **en ce qu'**il est prévu au moins un conduit (58) de refroidissement entre le diaphragme (56) et la paroi délimitant l'évidement (54).

9. Boîtier (10) de dispositif de mesure suivant l'une des revendications 1 à 8,
dans lequel le tube (14) de guidage et le tronçon (16) d'extrémité sont isolés de l'extérieur.

10. Boîtier (10) de dispositif de mesure suivant l'une des revendications 1 à 9,
dans lequel le tronçon (16) d'extrémité est une partie monolithique du tube (14) de guidage ou y est fixé.

11. Boîtier (10) de dispositif de mesure suivant l'une des revendications précédentes,
dans lequel une ligne de transmission de signal est disposée dans le tube de guidage.
